# EUROPEAN PATENT SPECIFICATION

(11) **EP 3 163 955 B1**
(45) Date of publication and mention of the grant of the patent: **24.07.2019**
(21) Application number: 16195185.0
(22) Date of filing: 21.10.2016
(51) Int. Cl.: H04W 64/00, H04W 24/08, G01S 5/02, H04W 4/80, H04W 4/00

(54) **LOCATION IDENTIFICATION USING DIVERSITY FINGERPRINTING**
POSITIONSIDENTIFIZIERUNG MIT DIVERSITÄTSFINGERABDRUCK
IDENTIFICATION D'EMPLACEMENT À L'AIDE DE DIVERSITÉ D'EMPREINTES

(30) Priority: 29.10.2015 US 201514926212
(43) Date of publication of application: 03.05.2017
(73) Proprietor: Honeywell International Inc., Morris Plains, NJ 07950 (US)
(72) Inventor: PULLETI, Uday, Morris Plains, NJ 07950 (US); MUKTEVI, Srinivas, Morris Plains, NJ 07950 (US); VOLAM, Praveen Kumar, Morris Plains, NJ 07950 (US)
(74) Representative: Houghton, Mark Phillip

(56) References cited:
- EP-A2- 2 552 162
- WO-A2-2009/117571
- CN-A- 104 577 322
- US-B1- 6 377 227
- US-B1- 8 416 123

## Description

### Background

Fingerprinting is used to find the location of a radio within range of one or more anchor transmitters. Each anchor transmitter sends out a signal which may vary in signal strength and time of arrival at various locations. These signal variations may be mapped and then used by the radio to determine the location of the radio. EP2552162 (2013-01-30) discloses a location system and method in which one or more access points having multiple beacons, create a particular directed propagation pattern; a mobile terminal measures received signal parameters from at least one beacon and this is used to determine the location of the mobile using fingerprinting. The directed propagation pattern is generated using directional antennas.

### Summary

The present invention provides for an anchor node and a corresponding method as claimed in the corresponding claims.

### Detailed Description

In the following description, reference is made to the accompanying drawings that form a part hereof, and in which is shown by way of illustration specific embodiments which may be practiced. These embodiments are described in sufficient detail to enable those skilled in the art to practice the invention, and it is to be understood that other embodiments may be utilized and that structural, logical and electrical changes may be made without departing from the scope of the present invention. The following description of example embodiments is, therefore, not to be taken in a limited sense, and the scope of the present invention is defined by the appended claims.

The functions or algorithms described herein may be implemented in software in one embodiment. The software may consist of computer executable instructions stored on computer readable media or computer readable storage device such as one or more non-transitory memories or other type of hardware based storage devices, either local or networked. Further, such functions correspond to modules, which may be software, hardware, firmware or any combination thereof. Multiple functions may be performed in one or more modules as desired, and the embodiments described are merely examples. The software may be executed on a digital signal processor, ASIC, microprocessor, or other type of processor operating on a computer system, such as a personal computer, server or other computer system, turning such computer system into a specifically programmed machine.

Location of assets by the use of fingerprinting may be performed using signal strength or time of flight or angle of arrival or a combination. One of the determining factors for position accuracy is the density of deployment of infrastructure nodes or anchors. Also, fingerprinting algorithms may rely on distinct signatures of wireless signal characteristics which may be obtained during a survey or radio map generation phase of implementing a location system. The accuracy of a position estimate heavily depends on the distinctness of these signatures. In large open spaces like office buildings, warehouses, industrial plants the signatures may not be distinct enough to get high enough position accuracy.

Location accuracy is increased in various embodiments by increasing the number of fingerprint signatures or creating diversity in fingerprint signatures from anchor nodes. Anchor nodes can be placed within an area, such as an indoor structure or building. Each anchor node may contain multiple sides, and have multiple transmitters supported on the different sides to increase the density of transmitters within the area without increasing the number of nodes in the area. A directional radio may be provided in a node to provide a stronger transmission signal in one direction than other directions. Such directional radios provide distinct radiation patterns resulting in distinct fingerprint signatures from each radio. Multiple directional radios may be incorporated on different sides of anchor nodes to both increase the density of transmitters in an area and provide multiple distinct fingerprint signatures at each node without increasing the number of nodes in the area.

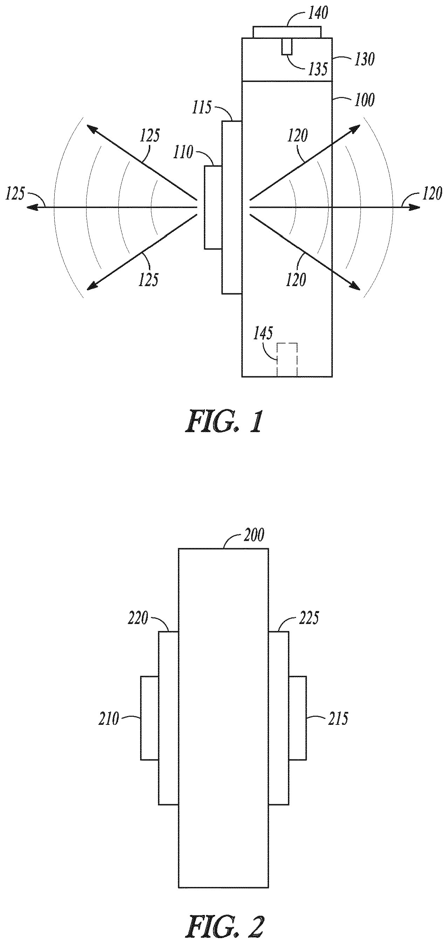

FIG. 1 is a block diagram of an anchor node 100 that includes a directional transmitter 110 and an RF (radio frequency) attenuator 115 coupled to the transmitter 110. The transmitter 110 may be a low cost radio, such as a BLE (Bluetooth® low energy) or WiFi radio, and the RF attenuator 115 may be a metallic reflector in one embodiment with the radio positioned on a first side of the attenuator 115 to attenuate transmission from the radio on the other, second side of the attenuator 115 as indicated by arrows 120. Transmission away from, or orthogonal to the first side is represented by arrows 125 and is not attenuated, resulting in stronger signal transmission and reception by a devices positioned away from the first side that also contains a radio. A simple distortion of an omni-directional transmission will be sufficient in some embodiments. Thus, the metallic reflector need not extend entirely across one side of the radio as shown and may instead be sized and positioned to cause a simple distortion. Note that transmissions may still be received by devices positioned away from the second side, but are likely weaker transmissions.

In various embodiments, the anchor node 100 may include a mechanism or means for fastening the anchor node within a space, such an office building or warehouse for example. The mechanism may include a detachable portion 130 of the anchor node 100 that may contain a hole 135 to facilitate using a screw to screw the detachable portion into a ceiling or other portion of a stationary structure within the space, or a clip or other even an standard power plug for plugging into an outlet and at the same time providing power to components supported by the anchor node 100. In still further embodiments, a two sided adhesive pad 140 may be used to securely position the anchor node 100 within the space. A hole 145 on one side of the anchor may also be used to attach the anchor node 100 to a pole or other protrusion within the structure. These are just a few examples of the many different means for securing the anchor node 100 and other embodiments of anchor nodes described below in a stationary position within the space.

The device may be an asset or person tagged with a radio, or a computer having a radio capable of receiving the transmissions and calculating a position based on the received radio signal or signals from multiple transmitters and a known mapping of fingerprint signatures of the transmitters. Location accuracy is increased with more distinct fingerprint signatures that may be obtained by the use of directional radios in space with multiple nodes. Many different algorithms are available for use by the device to determine its position from the transmitted signals.

In one embodiment, different radios that may be present on a single anchor node can be identified by the receiver as part of the single anchor node. For example, an anchor node with 4 radios may each have a MAC address of similar form, where a first part of the address identifies the node and a second part identifies a radio in the node. The MAC addresses of the four radios may be of the form 01-23-45-67-89-ab-cd-00, 01-23-45-67-89-ab-cd-01, 01-23-45-67-89-ab-cd-02, 01-23-45-67-89-ab-cd-03. The last two characters are different and identify the radios. The other characters are the same and may be used to identify the single anchor itself. There may be other mechanisms to achieve similar identification of radios sharing a single anchor. In some embodiments, beacon data may contain information that the four radios belong to the same anchor node.

The attenuator 115 function in some embodiments may be obtained by the use of directional printed circuit antennas, or other means of selectively attenuating or increasing signal strength in different directions. In various embodiments, there are no restrictions on a beam-width of the radiation pattern, as any diversity of fingerprint signatures may be used. The use of selective attenuation provides fingerprint orthogonality, resulting in higher accuracy of location algorithms, such as k nearest neighbor algorithms.

FIG. 2 is a side view block diagram illustration of an anchor node 200 that contains two transmitters 210 and 215 disposed on two horizontally opposite sides of the node 200, providing 360 degree coverage as a whole due to merging of radiation patterns of the transmitter. The two sides need not be perfectly opposite each other, but may be angled with respect to each other. Complete signal coverage may be provided while at the same time generating distinct fingerprints on either side of the anchor node 200. The use of two, or "n" transmitters on a single node increases the density of transmitters and hence fingerprint signatures that may be received by a device, thereby increasing the accuracy of typical location identifying algorithms. Each transmitter may be mounted on or include an attenuator, indicated at 220 and 225 to provide some amount of distortion to increase the distinctness of the transmission signature of the transmitters.

Due to the low cost of radios, the increase in accuracy from increasing the density of transmitters without having to increase the number of anchor nodes only marginally increases the cost of location identification infrastructure.

Transmitters supported on an anchor node need not be designed with directionality. Simply mounting the transmitters on different sides of the anchor may inherently provide some signature distinctness for each transmitter.

In one embodiment, anchor nodes may be formed of any material capable of supporting a transmitter and providing means for mounting the node within an area, such as an office building or warehouse. In some embodiments, the anchor may be formed of an RF attenuating material such as metal, or a non RF attenuating material such as a polymer or wood. By forming the anchor of an attenuating material, the need for a separate attenuator 115 where directionality is desired may be eliminated. Simply mounting the transmitter on a side or face of an anchor may provide directionality to the transmissions and increase fingerprint signature distinctness.

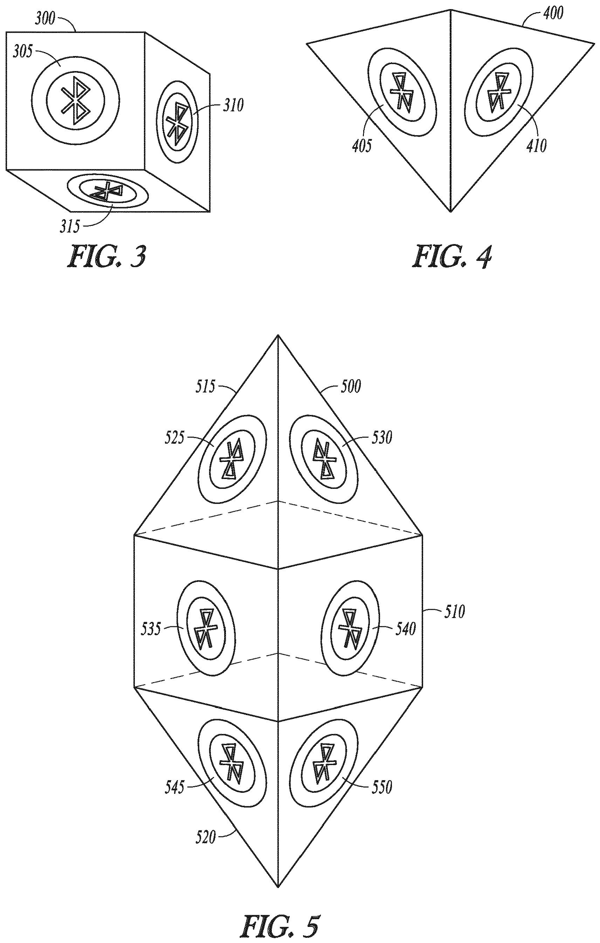

FIG. 3 is a perspective block diagram illustration of an anchor node 300 that is formed in the shape of a cube, which may be mounted on a ceiling of a structure or otherwise supported within the structure. Anchor node 300 may contain a transmitter on multiple sides, such as on n = two, three, or four sides, or all four sides and a bottom. Anchor node 300 is shown with visible transmitters 305 and 310 on two sides, and transmitter 315 on the bottom pointing down. The remaining sides that are not visible in this illustration may also contain transmitters such that transmitters point in all four directions from the sides of the anchor node 300 and one pointing down. Such an anchor node may be ideal for location tracking inside large office spaces and commercial buildings.

FIG. 4 is a perspective block diagram illustration of a pyramid shaped anchor node 400, illustrated with anchor nodes 405 and 410 on sides of the pyramid. Nodes 300 and 400 are ideal for ceiling mounting and position estimation in offices and commercial buildings with low ceilings.

FIG. 5 is a perspective block diagram illustration of a further anchor node 500 containing multiple transmitters. Anchor node 500 comprises a cube 510 with pyramids 515, 520 supported on respective top and bottom surfaces of the cube 510. Each side of the cube 510 and each face of the pyramids 515 and 520 may contain a transmitter as visible at 525, 530, 535, 540, 545, and 550. The n = 6 transmitters each create different fingerprint signatures, with those on the pyramid faces providing additional signature diversity in the vertical directions and those on the sides of cube 510 providing additional signature diversity in the horizontal direction. Anchor node 500 maybe useful in large warehouses and industrial plants with high ceilings where tracking of assets in the vertical direction as well as horizontal direction may be useful. Multiple anchors 500 may be supported on poles or other structures at different heights throughout such structures.

Each transmitter may comprises a common off the shelf radio board that may be powered at each node by a single battery for ease of maintainability. Multiple transmitters may be implemented as radios on a single board with individual directional antennas and controlled by a single microcontroller or application processor in accordance with a selected wireless communications protocol. Power may also be provided via an AC adapter when the anchor node is plugged into a power outlet.

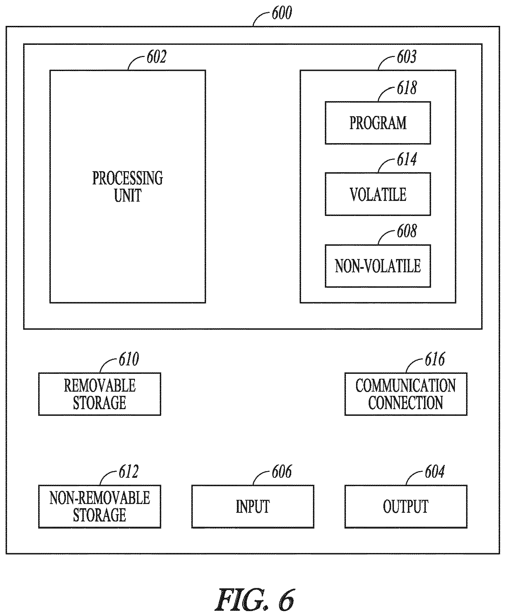

FIG. 6 is a block schematic diagram of a computer system 600 to implement the microcontroller according to example embodiments. All components need not be used for various embodiments. For example, the microcontroller implementation need not include multiple different types of memory or storage devices and drives and input/output devices.

One example computing device in the form of a computer 600, may include a processing unit 602, memory 603, removable storage 610, and non-removable storage 612. Although the example computing device is illustrated and described as computer 600, the computing device may be in different forms in different embodiments. For example, the computing device may instead be a smartphone, a tablet, smartwatch, or other computing device including the same or similar elements as illustrated and described with regard to FIG. 6. Devices such as smartphones, tablets, and smartwatches are generally collectively referred to as mobile devices. Further, although the various data storage elements are illustrated as part of the computer 600, the storage may also or alternatively include cloud-based storage accessible via a network, such as the Internet.

Memory 603 may include volatile memory 614 and non-volatile memory 608. Computer 600 may include - or have access to a computing environment that includes - a variety of computer-readable media, such as volatile memory 614 and non-volatile memory 608, removable storage 610 and non-removable storage 612. Computer storage includes random access memory (RAM), read only memory (ROM), erasable programmable read-only memory (EPROM) & electrically erasable programmable read-only memory (EEPROM), flash memory or other memory technologies, compact disc read-only memory (CD ROM), Digital Versatile Disks (DVD) or other optical disk storage, magnetic cassettes, magnetic tape, magnetic disk storage or other magnetic storage devices capable of storing computer-readable instructions for execution to perform functions described herein.

Computer 600 may include or have access to a computing environment that includes input 606, output 604, and a communication connection 616. Output 604 may include a display device, such as a touchscreen, that also may serve as an input device. The input 606 may include one or more of a touchscreen, touchpad, mouse, keyboard, camera, one or more device-specific buttons, one or more sensors integrated within or coupled via wired or wireless data connections to the computer 600, and other input devices. The computer may operate in a networked environment using a communication connection to connect to one or more remote computers, such as database servers, including cloud based servers and storage. The remote computer may include a personal computer (PC), server, router, network PC, a peer device or other common network node, or the like. The communication connection may include a Local Area Network (LAN), a Wide Area Network (WAN), cellular, WiFi, Bluetooth, or other networks.

Computer-readable instructions stored on a computer-readable storage device are executable by the processing unit 602 of the computer 600. A hard drive, CD-ROM, and RAM are some examples of articles including a non-transitory computer-readable medium such as a storage device. The terms computer-readable medium and storage device do not include carrier waves. For example, a computer program 618 capable of providing a generic technique to perform access control check for data access and/or for doing an operation on one of the servers in a component object model (COM) based system may be included on a CD-ROM and loaded from the CD-ROM to a hard drive. The computer-readable instructions allow computer 600 to provide generic access controls in a COM based computer network system having multiple users and servers.

Although a few embodiments have been described in detail above, other modifications are possible. For example, the logic flows depicted in the figures do not require the particular order shown, or sequential order, to achieve desirable results. Other steps may be provided, or steps may be eliminated, from the described flows, and other components may be added to, or removed from, the described systems. Other embodiments may be within the scope of the appended claims.
transitory computer-readable medium such as a storage device. The terms computer-readable medium and storage device do not include carrier waves. For example, a computer program 618 capable of providing a generic technique to perform access control check for data access and/or for doing an operation on one of the servers in a component object model (COM) based system may be included on a CD-ROM and loaded from the CD-ROM to a hard drive. The computer-readable instructions allow computer 600 to provide generic access controls in a COM based computer network system having multiple users and servers.

Although a few embodiments have been described in detail above, other modifications are possible. For example, the logic flows depicted in the figures do not require the particular order shown, or sequential order, to achieve desirable results. Other steps may be provided, or steps may be eliminated, from the described flows, and other components may be added to, or removed from, the described systems. Other embodiments may be within the scope of the appended claims.

## Claims

1. An anchor node (200, 300, 400, 500) configured for placement in a space having multiple sides and comprising:
multiple radio frequency transmitters (210, 215, 305, 310, 315, 405, 410, 525, 530, 535, 540, 545, 550) supported by the multiple sides of the anchor node (200, 300, 400, 500); and
multiple radio frequency attenuators (220, 225) supported by the multiple sides of the anchor node (200, 300, 400, 500), each of the multiple radio frequency attenuators (220, 225) paired with a corresponding one of the multiple radio frequency transmitters (210, 215, 305, 310, 315, 405, 410, 525, 530, 535, 540, 545, 550), the multiple radio frequency transmitters (210, 215, 305, 310, 315, 405, 410, 525, 530, 535, 540, 545, 550) in combination with the multiple radio frequency attenuators (220, 225) providing a distinctive signature of transmission within the space, the distinctive signature being receivable by a radio for the determination of a location of the radio within the space.

2. The anchor node (200, 300, 400, 500) of claim 1, wherein the radio frequency transmitters (210, 215, 305, 310, 315, 405, 410, 525, 530, 535, 540, 545, 550) are omni-directional radios and wherein each radio frequency transmitter (210, 215, 305, 310, 315, 405, 410, 525, 530, 535, 540, 545, 550) has a multiple part address, wherein a first part identifies the anchor node (200, 300, 400, 500) and a second part identifies the radio supported by the anchor node (200, 300, 400, 500).

3. The anchor node (200, 300, 400, 500) of claim 2, wherein the anchor node (200, 300, 400, 500) has two horizontally opposing sides and the multiple radio frequency transmitters (210, 215, 305, 310, 315,405, 410, 525, 530, 535, 540, 545, 550) comprise a radio frequency transmitter on each side and wherein each radio frequency transmitter has a multiple part MAC address, wherein a first part identifies the anchor node and a second part identifies the radio frequency transmitter supported by the anchor node.

4. The anchor node (200, 300, 400, 500) of claim 1, wherein the anchor node (200, 300, 400, 500) comprises a cube shape with four sides, a top, and a bottom.

5. The anchor node (200, 300, 400, 500) of any one of claims 1-3, wherein the anchor node radio (110) comprises a Bluetooth low energy radio or a low power WiFi radio.

6. The anchor node (200, 300, 400, 500) of any one of claims 1-5, wherein each radio frequency transmitter (210, 215, 305, 310, 315, 405, 410, 525, 530, 535, 540, 545, 550) is an omni-directional radio.

7. A method comprising:
placing an anchor node (200, 300, 400, 500) within a space having multiple sides and comprising:
multiple radio frequency transmitters (210, 215, 305, 310, 315, 405, 410, 525, 530, 535, 540, 545, 550) on the multiple sides of the anchor node (200, 300, 400, 500); and
multiple radio frequency attenuators (220, 225) supported by the multiple sides of the anchor node (200, 300, 400, 500), each of the multiple radiofrequency attenuators (220, 225) paired with a corresponding one of the multiple radio frequency transmitters (210, 215, 305, 310, 315, 405, 410, 525, 530, 535, 540, 545, 550); and
transmitting signals from the radio frequency transmitters (210, 215, 305, 310, 315, 405, 410, 525, 530, 535, 540, 545, 550) to provide the distinctive signature of transmission within the space, the distinctive signature being receivable by a radio for the determination of a location of the radio within the space.

8. The method of claim 7, wherein the radio frequency transmitters (210, 215, 305, 310, 315, 405, 410, 525, 530, 535, 540, 545, 550) are omni-directional radios and wherein each radio frequency transmitter (210, 215, 305, 310, 315, 405, 410, 525, 530, 535, 540, 545, 550) has a multiple part address, wherein a first part identifies the anchor node (200, 300, 400, 500) and a second part identifies the radio supported by the anchor node (200, 300, 400, 500).

9. The method of claim 8, wherein the anchor node (200, 300, 400, 500) has two horizontally opposing sides and the multiple radio frequency transmitters (210, 215, 305, 310, 315,405, 410, 525, 530, 535, 540, 545, 550) comprise a radio frequency transmitter on each side and wherein each radio frequency transmitter has a multiple part MAC address, wherein a first part identifies the anchor node and a second part identifies the radio frequency transmitter supported by the anchor node.

10. The method of claim 7, wherein the anchor node (200, 300, 400, 500) comprises a cube shape with four sides, a top, and a bottom.

11. The method of any one of claims 7-10, wherein the anchor node radio (110) comprises a Bluetooth low energy radio or a low power WiFi radio.

12. The method of any one of claims 7-11, wherein each radio frequency transmitter (210, 215, 305, 310, 315, 405, 410, 525, 530, 535, 540, 545, 550) is an omni-directional radio.

## Patentansprüche

1. Ankerknoten (200, 300, 400, 500), der zur Anordnung in einem Raum ausgebildet ist, wobei er mehrere Seiten hat und aufweist:
mehrere Funkfrequenzsender (210, 215, 305, 310, 315, 405, 410, 525, 530, 535, 540, 545, 550), die von den mehreren Seiten des Ankerknotens (200, 300, 400, 500) getragen werden; und
mehrere Funkfrequenzdämpfungsglieder (220, 225), die von den mehreren Seiten des Ankerknotens (200, 300, 400, 500) getragen werden, wobei jedes der mehreren Funkfrequenzdämpfungsglieder (220, 225) mit einem entsprechenden der mehreren Funkfrequenzsender (210, 215, 305, 310, 315, 405, 410, 525, 530, 535, 540, 545, 550) gepaart ist, wobei die mehreren Funkfrequenzsender (210, 215, 305, 310, 315, 405, 410, 525, 530, 535, 540, 545, 550) zusammen mit den mehreren Funkfrequenzdämpfungsgliedern (220, 225) eine charakteristische Signatur einer Übertragung innerhalb des Raumes bereitstellen, wobei die charakteristische Signatur von einer Funkeinrichtung für die Bestimmung eines Standorts der Funkeinrichtung in dem Raum empfangen werden kann.

2. Ankerknoten (200, 300, 400, 500) nach Anspruch 1, wobei die Funkfrequenzsender (210, 215, 305, 310, 315, 405, 410, 525, 530, 535, 540, 545, 550) omnidirektionale Funkeinrichtungen sind und wobei jeder Funkfrequenzsender (210, 215, 305, 310, 315, 405, 410, 525, 530, 535, 540, 545, 550) eine mehrteilige Adresse aufweist, wobei ein erster Teil den Ankerknoten (200, 300, 400, 500) identifiziert und ein zweiter Teil die Funkeinrichtung identifiziert, die von dem Ankerknoten (200, 300, 400, 500) getragen wird.

3. Ankerknoten (200, 300, 400, 500) nach Anspruch 2, wobei der Ankerknoten (200, 300, 400, 500) zwei horizontal gegenüberliegende Seiten aufweist und die mehreren Funkfrequenzsender (210, 215, 305, 310, 315, 405, 410, 525, 530, 535, 540, 545, 550) einen Funkfrequenzsender auf jeder Seite umfassen und wobei jeder Funkfrequenzsender eine mehrteilige MAC-Adresse aufweist, wobei ein erster Teil den Ankerknoten identifiziert und ein zweiter Teil den Funkfrequenzsender identifiziert, der von dem Ankerknoten getragen wird.

4. Ankerknoten (200, 300, 400, 500) nach Anspruch 1, wobei der Ankerknoten (200, 300, 400, 500) eine Würfelform mit vier Seiten, einer Oberseite und einer Unterseite aufweist.

5. Ankerknoten (200, 300, 400, 500) nach einem der Ansprüche 1-3, wobei die Ankerknotenfunkeinrichtung (110) eine Bluetooth-Low-Energy-Funkeinrichtung oder eine Wi-Fi-Funkeinrichtung mit niedriger Leistung umfasst.

6. Ankerknoten (200, 300, 400, 500) nach einem der Ansprüche 1-5, wobei jeder Funkfrequenzsender (210, 215, 305, 310, 315, 405, 410, 525, 530, 535, 540, 545, 550) eine omnidirektionale Funkeinrichtung ist.

7. Verfahren, das umfasst:
das Anordnen eines Ankerknotens (200, 300, 400, 500) innerhalb eines Raums, wobei er mehrere Seiten hat und aufweist:
mehrere Funkfrequenzsender (210, 215, 305, 310, 315, 405, 410, 525, 530, 535, 540, 545, 550) auf den mehreren Seiten des Ankerknotens (200, 300, 400, 500); und
mehrere Funkfrequenzdämpfungsglieder (220, 225), die von den mehreren Seiten des Ankerknotens (200, 300, 400, 500) getragen werden, wobei jedes der mehreren Funkfrequenzdämpfungsglieder (220, 225) mit einem entsprechenden der mehreren Funkfrequenzsender (210, 215, 305, 310, 315, 405, 410, 525, 530, 535, 540, 545, 550) gepaart ist; und
das Übertragen von Signalen von den Funkfrequenzsendern (210, 215, 305, 310, 315, 405, 410, 525, 530, 535, 540, 545, 550) zum Bereitstellen der charakteristischen Signatur einer Übertragung innerhalb des Raumes, wobei die charakteristische Signatur von einer Funkeinrichtung für die Bestimmung eines Standorts der Funkeinrichtung in dem Raum empfangen werden kann.

8. Verfahren nach Anspruch 7, wobei die Funkfrequenzsender (210, 215, 305, 310, 315, 405, 410, 525, 530, 535, 540, 545, 550) omnidirektionale Funkeinrichtungen sind und wobei jeder Funkfrequenzsender (210, 215, 305, 310, 315, 405, 410, 525, 530, 535, 540, 545, 550) eine mehrteilige Adresse aufweist, wobei ein erster Teil den Ankerknoten (200, 300, 400, 500) identifiziert und ein zweiter Teil die Funkeinrichtung identifiziert, die von dem Ankerknoten (200, 300, 400, 500) getragen wird.

9. Verfahren nach Anspruch 8, wobei der Ankerknoten (200, 300, 400, 500) zwei horizontal gegenüberliegende Seiten aufweist und die mehreren Funkfrequenzsender (210, 215, 305, 310, 315, 405, 410, 525, 530, 535, 540, 545, 550) einen Funkfrequenzsender auf jeder Seite umfassen und wobei jeder Funkfrequenzsender eine mehrteilige MAC-Adresse aufweist, wobei ein erster Teil den Ankerknoten identifiziert und ein zweiter Teil den Funkfrequenzsender identifiziert, der von dem Ankerknoten getragen wird.

10. Verfahren nach Anspruch 7, wobei der Ankerknoten (200, 300, 400, 500) eine Würfelform mit vier Seiten, einer Oberseite und einer Unterseite aufweist.

11. Verfahren nach einem der Ansprüche 7-10, wobei die Ankerknotenfunkeinrichtung (110) eine Bluetooth-Low-Energy-Funkeinrichtung oder eine Wi-Fi-Funkeinrichtung mit niedriger Leistung umfasst.

12. Verfahren nach einem der Ansprüche 7-11, wobei jeder Funkfrequenzsender (210, 215, 305, 310, 315, 405, 410, 525, 530, 535, 540, 545, 550) eine omnidirektionale Funkeinrichtung ist.

## Revendications

1. Noeud-ancre (200, 300, 400, 500) configuré pour être placé dans un espace présentant de multiples côtés et comprenant :
de multiples émetteurs radiofréquences (210, 215, 305, 310, 315, 405, 410, 525, 530, 535, 540, 545, 550) portés par les multiples côtés du noeud-ancre (200, 300, 400, 500) ; et
de multiples atténuateurs radiofréquences (220, 225) portés par les multiples côtés du noeud-ancre (200, 300, 400, 500), chacun des multiples atténuateurs radiofréquences (220, 225) étant apparié avec un émetteur radiofréquence correspondant des multiples émetteurs radiofréquences (210, 215, 305, 310, 315, 405, 410, 525, 530, 535, 540, 545, 550), les multiples émetteurs radiofréquences (210, 215, 305, 310, 315, 405, 410, 525, 530, 535, 540, 545, 550) combinés aux multiples atténuateurs radiofréquences (220, 225) fournissant une signature de transmission distinctive au sein de l'espace, la signature distinctive étant susceptible d'être reçue par une radio pour la détermination d'une localisation de la radio au sein de l'espace.

2. Noeud-ancre (200, 300, 400, 500) selon la revendication 1, dans lequel les émetteurs radiofréquences (210, 215, 305, 310, 315, 405, 410, 525, 530, 535, 540, 545, 550) sont des radios omnidirectionnelles, et dans lequel chaque émetteur radiofréquence (210, 215, 305, 310, 315, 405, 410, 525, 530, 535, 540, 545, 550) possède une adresse à parties multiples, une première partie identifiant le noeud-ancre (200, 300, 400, 500) et une deuxième partie identifiant la radio portée par le noeud-ancre (200, 300, 400, 500).

3. Noeud-ancre (200, 300, 400, 500) selon la revendication 2, lequel noeud-ancre (200, 300, 400, 500) présente deux côtés horizontalement opposés et les multiples émetteurs radiofréquences (210, 215, 305, 310, 315, 405, 410, 525, 530, 535, 540, 545, 550) comprennent un émetteur radiofréquence sur chaque côté, et dans lequel chaque émetteur radiofréquence possède une adresse MAC à parties multiples, une première partie identifiant le noeud-ancre et une deuxième partie identifiant l'émetteur radiofréquence porté par le noeud-ancre.

4. Noeud-ancre (200, 300, 400, 500) selon la revendication 1, lequel noeud-ancre (200, 300, 400, 500) comprend une forme cubique possédant quatre côtés, un dessus et un dessous.

5. Noeud-ancre (200, 300, 400, 500) selon l'une quelconque des revendications 1 à 3, dans lequel la radio (110) du noeud-ancre comprend une radio Bluetooth basse énergie ou une radio WiFi basse puissance.

6. Noeud-ancre (200, 300, 400, 500) selon l'une quelconque des revendications 1 à 5, dans lequel chaque émetteur radiofréquence (210, 215, 305, 310, 315, 405, 410, 525, 530, 535, 540, 545, 550) est une radio omnidirectionnelle.

7. Procédé, comprenant :
la mise en place d'un noeud-ancre (200, 300, 400, 500) au sein d'un espace présentant de multiples côtés et comprenant :
de multiples émetteurs radiofréquences (210, 215, 305, 310, 315, 405, 410, 525, 530, 535, 540, 545, 550) sur les multiples côtés du noeud-ancre (200, 300, 400, 500) ; et
de multiples atténuateurs radiofréquences (220, 225) portés par les multiples côtés du noeud-ancre (200, 300, 400, 500), chacun des multiples atténuateurs radiofréquences (220, 225) étant apparié avec un émetteur radiofréquence correspondant des multiples émetteurs radiofréquences (210, 215, 305, 310, 315, 405, 410, 525, 530, 535, 540, 545, 550) ; et
la transmission de signaux depuis les émetteurs radiofréquences (210, 215, 305, 310, 315, 405, 410, 525, 530, 535, 540, 545, 550) pour fournir la signature de transmission distinctive au sein de l'espace, la signature distinctive étant susceptible d'être reçue par une radio pour la détermination d'une localisation de la radio au sein de l'espace.

8. Procédé selon la revendication 7, dans lequel les émetteurs radiofréquences (210, 215, 305, 310, 315, 405, 410, 525, 530, 535, 540, 545, 550) sont des radios omnidirectionnelles, et dans lequel chaque émetteur radiofréquence (210, 215, 305, 310, 315, 405, 410, 525, 530, 535, 540, 545, 550) possède une adresse à parties multiples, une première partie identifiant le noeud-ancre (200, 300, 400, 500) et une deuxième partie identifiant la radio portée par le noeud-ancre (200, 300, 400, 500).

9. Procédé selon la revendication 8, dans lequel le noeud-ancre (200, 300, 400, 500) présente deux côtés horizontalement opposés et les multiples émetteurs radiofréquences (210, 215, 305, 310, 315, 405, 410, 525, 530, 535, 540, 545, 550) comprennent un émetteur radiofréquence sur chaque côté, et dans lequel chaque émetteur radiofréquence possède une adresse MAC à parties multiples, une première partie identifiant le noeud-ancre et une deuxième partie identifiant l'émetteur radiofréquence porté par le noeud-ancre.

10. Procédé selon la revendication 7, dans lequel le noeud-ancre (200, 300, 400, 500) comprend une forme cubique possédant quatre côtés, un dessus et un dessous.

11. Procédé selon l'une quelconque des revendications 7 à 10, dans lequel la radio (110) du noeud-ancre comprend une radio Bluetooth basse énergie ou une radio WiFi basse puissance.

12. Procédé selon l'une quelconque des revendications 7 à 11, dans lequel chaque émetteur radiofréquence (210, 215, 305, 310, 315, 405, 410, 525, 530, 535, 540, 545, 550) est une radio omnidirectionnelle.
